# EUROPEAN PATENT SPECIFICATION

(11) **EP 2 574 536 B1**
(45) Date of publication and mention of the grant of the patent: **09.09.2015**
(21) Application number: 12186094.4
(22) Date of filing: 26.09.2012
(51) Int. Cl.: B62K 25/28, B62L 1/00, B60T 1/06, F16D 55/00

(54) **Two-wheeled motor vehicle**
Zweirädriges Motorfahrzeug
Véhicule motorisé à deux roues

(30) Priority: 27.09.2011 JP 2011210807
(43) Date of publication of application: 03.04.2013
(73) Proprietor: Yamaha Hatsudoki Kabushiki Kaisha, Shizuoka-ken Shizuoka 438-8501 (JP)
(72) Inventor: Hombo, Yoshihisa, Shizuoka-ken, Shizuoka 438-8501 (JP)
(74) Representative: Zimmermann, Tankred Klaus

(56) References cited:
- US-A1- 2002 029 940
- US-A1- 2002 033 296
- US-A1- 2006 076 197
- US-A1- 2008 078 601
- US-A1- 2009 000 883
- US-A1- 2011 056 323

## Description

### BACKGROUND OF THE INVENTION

### (1) Field of the Invention

The present invention relates to a two-wheeled motor vehicle, and particularly to its braking device.

### (2) Description of the Related Art

Conventionally, a two-wheeled motor vehicle having a Continuously Variable Transmission includes a braking device constructed such that, even when the rider releases a brake lever at a stopping time, the rear wheel rotates to prevent the vehicle from making a turning movement. This braking device belongs to a different system to an ordinary braking device used during traveling. A mechanical braking device for quiescence is operable, by pulling a lever provided adjacent a handlebar, to cause a mechanical caliper for quiescence through a wire to press on a brake disc of the rear wheel and prevent rotation of the brake disc. JP 3848525 B2 describes a two-wheeled motor vehicle according to the preamble of claim 1 and having a mechanical caliper for quiescence and a service caliper fixed to a swing arm.

### (1) Technique of JP 3848525 B2

The two-wheeled motor vehicle described in JP 3848525 B2 causes the mechanical caliper for quiescence and the service caliper fixed to the swing arm apply brakes to the brake disc.

### SUMMARY OF THE INVENTION

With the two-wheeled motor vehicle described in JP 3848525 B2, the service caliper or the mechanical caliper for quiescence disposed adjacent the brake disc and an exhaust muffler are arranged around the rear wheel. This arrangement results in an increased width of the two-wheeled motor vehicle, and in a restricted bank angle.

The present invention has been made having regard to the state of the art noted above, and its object is to provide a two-wheeled motor vehicle which reduces a vehicle width even if the vehicle has a mechanical caliper for quiescence.

The above object is fulfilled, according to this invention, by a two-wheeled motor vehicle that includes a body frame. A rear wheel is swingable through an area relative to the body frame. An exhaust muffler is disposed at a side of the rear wheel and attached to a side of the body frame. A brake disc is attached to the side, where the exhaust muffler is disposed, of the rear wheel. A service caliper is disposed on the brake disc for producing a braking force in time of traveling. A mechanical caliper for quiescence prevents rotation of the brake disc. The mechanical caliper is disposed on the brake disc separately from the service caliper. In a side view and in every position within the entire area through which the rear wheel is swingable, the mechanical caliper and the service caliper are located below different sites of the exhaust muffler that are each closest to the rear wheel than any other site of the exhaust muffler in respective cross sections taken in different axial positions of the exhaust muffler.

According to the present invention, the exhaust muffler is attached to a side of the body frame, and the brake disc, service caliper and mechanical caliper for quiescence are attached to the same side as the exhaust muffler. By attaching the service caliper and mechanical caliper for quiescence as separate elements to the brake disc, the structure of each is simplified and maintenance and change of the parts are made easy. Further, in the entire area through which the rear wheel is swingable, the mechanical caliper for quiescence and the service caliper are located, in side view, below the locus of the sites, closest to the rear wheel, in the respective cross sections taken in different positions axially of the exhaust muffler. Therefore, the calipers do not overlap the portion, closest to the rear wheel, of each cross section of the exhaust muffler transversely of the vehicle body. Consequently, the exhaust muffler can be disposed close to the rear wheel, thereby realizing a reduced size in the width direction of the two-wheeled motor vehicle.

The two-wheeled motor vehicle may further comprise a rear wheel axle for rotatably supporting the rear wheel, wherein one of the mechanical caliper for quiescence and the service caliper is disposed forward of and below the rear wheel axle, and the other is disposed rearward of and above the rear wheel axle.

According to this construction, with one of the mechanical caliper for quiescence and the service caliper disposed forward of and below the rear wheel axle, and the other disposed rearward of and above the rear wheel axle, the mechanical caliper for quiescence and the service caliper are opposed to each other across the rear wheel axle. Since the mechanical caliper for quiescence and the service caliper are spaced from each other, an exposed surface of the brake disc is formed rearward of and below the rear wheel axle, whereby the brake disc can be cooled efficiently.

The two-wheeled motor vehicle may further comprise a swing arm swingably supported by the body frame, and a rear wheel axle connected to the swing arm for rotatably supporting the rear wheel, wherein one of the mechanical caliper for quiescence and the service caliper is disposed forward of the rear wheel axle and below the swing arm, and the other is disposed rearward of the rear wheel axle and above the swing arm. Since the rear wheel is supported through the swing arm swingably supported relative to the body frame, the rear wheel is swingable with the mechanical caliper for quiescence, service caliper, and swing arm.

With one of the mechanical caliper for quiescence and the service caliper disposed forward of the rear wheel axle and below the swing arm, and the other disposed rearward of the rear wheel axle and above the swing arm, the mechanical caliper for quiescence and the service caliper are opposed to each other across the rear wheel axle. Since the mechanical caliper for quiescence and the service caliper are spaced from each other, an exposed surface of the brake disc is formed rearward of and below the rear wheel axle, whereby the brake disc can be cooled efficiently. Since the mechanical caliper for quiescence and the service caliper are arranged above or below the swing arm, the mechanical caliper for quiescence and the service caliper do not overlap the swing arm in side view of the vehicle, which realizes a reduced size in the width direction of the two-wheeled motor vehicle.

The service caliper may be disposed below the mechanical caliper for quiescence. The service caliper heavier than the mechanical caliper for quiescence may be disposed forward of and below the mechanical caliper for quiescence, thereby to attain a low center of gravity. By disposing the service caliper, which is heated by braking heat, below the swing arm where strong air flows occur in time of traveling, cooling efficiency also is improved. Improved visibility and improved maintainability are assured by disposing the mechanical caliper for quiescence, which has a high frequency of maintenance, rearward of and above the service caliper.

The exhaust muffler may be attached to the body frame to extend rearward and upward. The exhaust muffler attached to the body frame to extend rearward and upward can reduce the area where the exhaust muffler and the brake disc overlap each other in side view of the vehicle, and increase the extents of exposure of the mechanical caliper for quiescence and the service caliper. Since the exhaust muffler can be spaced from the mechanical caliper for quiescence and service caliper, the action of radiation heat from the exhaust muffler is reduced, thereby to improve the cooling effect of each caliper.

The two-wheeled motor vehicle may further comprise a rear wheel drive mechanism disposed at an opposite side of the mechanical caliper for quiescence and the service caliper. The rear wheel drive mechanism is disposed at the opposite side of the mechanical caliper for quiescence and the service caliper. That is, the rear wheel drive mechanism is disposed at one side of the rear wheel, while the exhaust muffler, brake disc, mechanical caliper for quiescence, and service caliper are arranged at the other side of the rear wheel. This arrangement can reduce a bias in the right and left vehicle width around the rear wheel, and reduce a difference in weight between right and left sides.

The two-wheeled motor vehicle may further comprise a rear wheel suspension for absorbing swings of the rear wheel, wherein, in a state of maximum compression of the rear wheel suspension, at least one of the mechanical caliper for quiescence and the service caliper overlaps the exhaust muffler in side view of the vehicle.

According to this construction, in the state of maximum load of the rear wheel suspension, at least one of the mechanical caliper for quiescence and the service caliper overlaps the exhaust muffler in side view of the vehicle. Since each caliper and the widest portion of the exhaust muffler do not overlap each other in this state, the size in the width direction of the two-wheeled motor vehicle can be reduced. Further, since, in the state of maximum load of the rear wheel suspension, at least one of the mechanical caliper for quiescence and the service caliper overlaps the exhaust muffler in side view of the vehicle, an overlap area of at least one of the mechanical caliper for quiescence and the service caliper and the exhaust muffler will decrease as the load weakens from the state of maximum load of the rear wheel suspension. Consequently, the mechanical caliper for quiescence, service caliper, and brake disc can be exposed, and can be cooled appropriately.

The rear wheel suspension may be disposed forward of the rear wheel. Since the rear wheel suspension is disposed forward of the rear wheel, the rear wheel suspension does not overlap the mechanical caliper for quiescence or the service caliper in side view of the vehicle. This can further reduce the size in the width direction of the two-wheeled motor vehicle. The two-wheeled motor vehicle may further comprise a caliper bracket for supporting the service caliper and the mechanical caliper for quiescence, the caliper bracket including two arms for supporting the service caliper, and one arm extending in an opposite direction to one of the two arms for supporting the mechanical caliper for quiescence. Since the caliper bracket supports the service caliper with the two arms, vibration of the service caliper can be reduced when braking the brake disc in rotation. Since the mechanical caliper for quiescence pinches the brake disc at rest, there is a low possibility of vibration of the mechanical caliper for quiescence, and thus the mechanical caliper for quiescence can be supported with one arm. Since the arm supporting the mechanical caliper for quiescence extends in the opposite direction to one of the two arms supporting the service caliper, the service caliper and the mechanical caliper for quiescence can be arranged opposite each other, thereby to be able to secure an exposure area of the brake disc.

In the entire area through which the rear wheel is swingable, the mechanical caliper for quiescence and the service caliper are located, in side view, below the locus of the sites, closest to the rear wheel, in the respective cross sections taken in different positions axially of the exhaust muffler. Therefore, the calipers do not overlap the portion, closest to the rear wheel, of each cross section of the exhaust muffler transversely of the vehicle body. Consequently, the exhaust muffler can be disposed close to the rear wheel, thereby realizing a reduced size in the width direction of the two-wheeled motor vehicle.

### BRIEF DESCRIPTION OF THE DRAWINGS

For the purpose of illustrating the invention, there are shown in the drawings several forms which are presently preferred, it being understood, however, that the invention is not limited to the precise arrangement and instrumentalities shown.
Fig. 1 is a left side view showing an outline construction of a two-wheeled motor vehicle according to the invention;
Fig. 2 is a right side view showing the outline construction of the two-wheeled motor vehicle;
Fig. 3 is a schematic view of a rear wheel braking device;
Fig. 4 is a view in vertical section of the rear wheel braking device;
Fig. 5 is an inner plan view of a swing arm and a caliper bracket;
Fig. 6 is an enlarged view of a rear wheel and adjacent components of the two-wheeled motor vehicle;
Fig. 7 is an enlarged view of the rear wheel and adjacent components of the two-wheeled motor vehicle; and
Fig. 8 is a section taken on line VIII of Fig. 7.

### DESCRIPTION OF THE PREFERRED EMBODIMENTS

A preferred embodiment of the present invention will be described in detail hereinafter with reference to the drawings.

In the following description, front, rear, right and left refer to those as seen from the rider seated on a two-wheeled motor vehicle.

### 1. Outline construction of two-wheeled motor vehicle

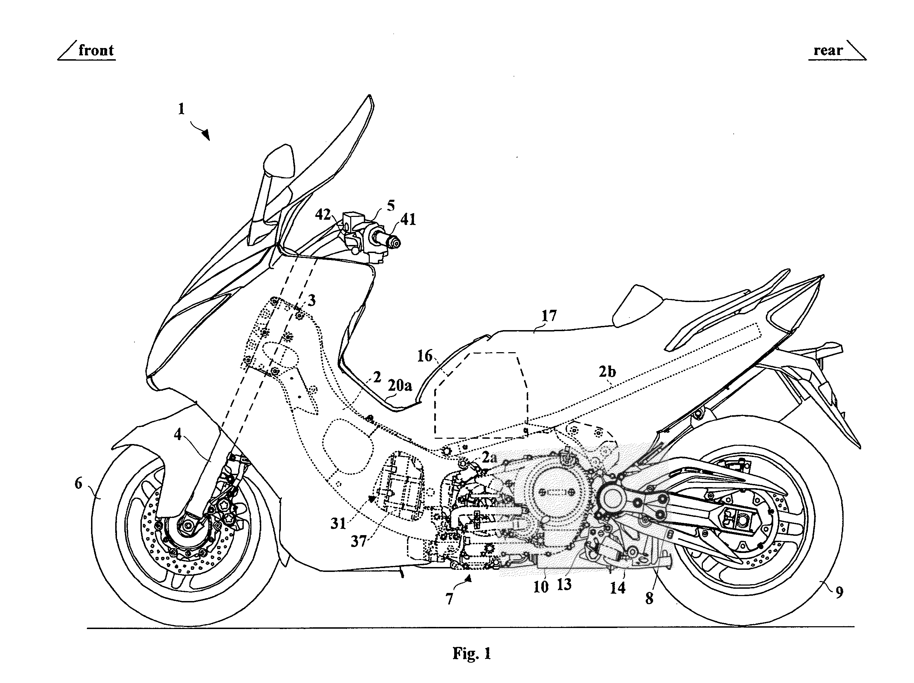

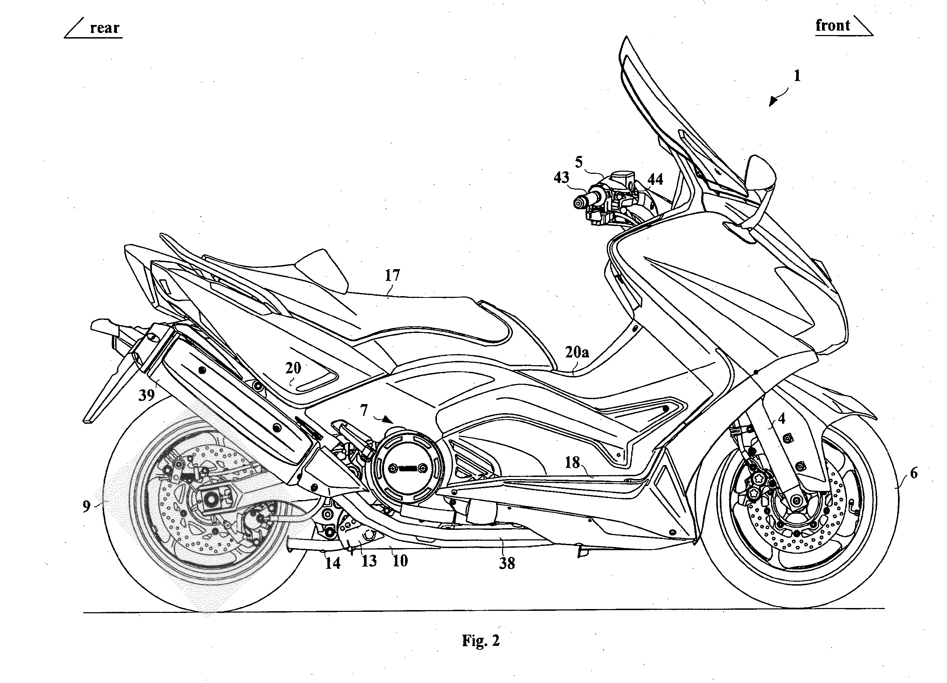

Reference is made to Figs. 1 and 2. Fig. 1 is a left side figure showing an outline construction of a two-wheeled motor vehicle 1 according to the invention. Fig. 2 is a right side view showing an outline construction in a body cover of the two-wheeled motor vehicle 1. The two-wheeled motor vehicle 1 is a scooter type vehicle with a diamond frame type body frame 2 which has an arc-like shape extending downward from a front end. The body frame 2 is not limited to this, but may be an underborne type frame. A head tube 3 is disposed in an upper front portion of the body frame 2. The head tube 3 rotatably supports a front fork 4. A handlebar 5 is connected to an upper end of the front fork 4. The front fork 4 is rotatable by operation of the handlebar 5. A front wheel 6 is rotatably attached to a lower end of the front fork 4.

An engine unit 7 is attached to the body frame 2 through a bracket 2a. With the engine unit 7 fixed to the body frame 2, the engine unit 7 acts as part of the frame 2. This can reduce frame pipes to render the vehicle body compact and lightweight. Above the engine unit 7 and a rear wheel 9, a seat frame 2b extends rearward as part of the body frame 2.

A swing arm 8 is connected to the rear of the engine unit 7 to be swingable up and down. Although connected to the engine unit 7, the swing arm 8 is not connected directly to the body frame 2. That is, the swing arm 8 is connected to the body frame 2 through the engine unit 7. The rear wheel 9 is rotatably supported by the rear of the swing arm 8. A rear suspension 10 is provided between the rear of the body frame 2 and the rear wheel 9 for absorbing swings of the swing arm 8. The rear suspension 10 is connected at 11 to the swing arm 8 to absorb swings of the swing arm 8. The rear suspension 10 corresponds to the rear wheel suspension in the present invention.

A main stand 14 is pivotably connected to a lower portion at the rear of the engine unit 7 through a bracket 13. A fuel tank 16 is provided above the engine unit 7. A seat 17 on which the rider sits is formed above the fuel tank 16. Low-floor footrests 18 for supporting the rider's feet are formed between the handlebar 5 and the seat 17. The footrests 18 extend forward from positions at right and left sides of the seat 17. The body frame 2 is covered with body covers 20 divided into varied parts. In particular, a cover 20a is disposed between the right and left footrests 18 and forward of the seat 17 to project upward from the footrests 18. An engine 31 of the engine unit 7 is disposed, and particularly a cylinder block 37 of the engine 31 is disposed, under the cover 20a. The cylinder block 37 is located forward of a crankcase 36.

An exhaust pipe 38 is disposed below the engine unit 7 and the footrests 18. An exhaust muffler 39 is attached to a rear end of the exhaust pipe 38, and is attached to the seat frame 2b with bolts 40, to extend rearward and upward. The exhaust muffler 39 has a cylindrical shape.

A rear brake lever 42 is provided forward of a left handgrip 41 at a left end of the handlebar 5. A front brake lever 44 is provided forward of a right handgrip 43 at a right end of the handlebar 5. The rider can brake the rear wheel 9 by grasping the rear brake lever 42, and can brake the front wheel 6 by grasping the front brake lever 44.

### 2. Construction of rear wheel braking device

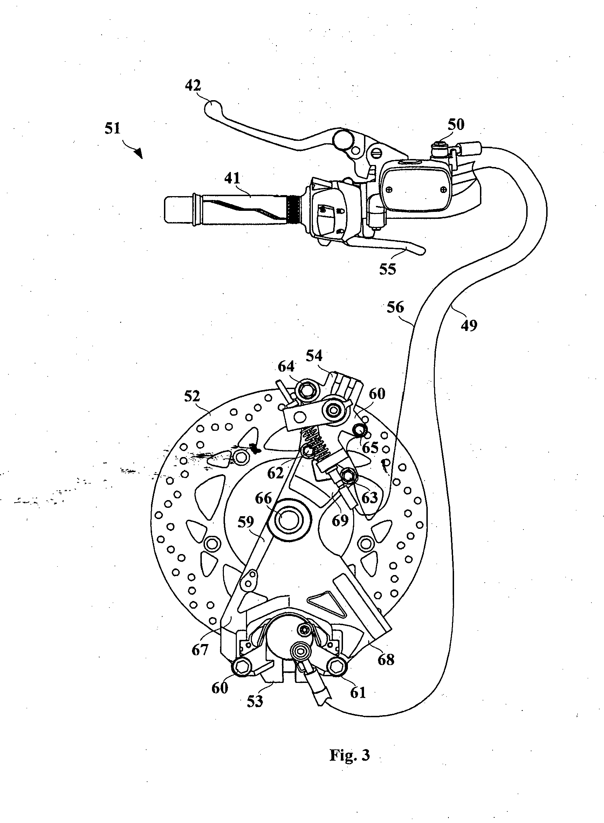

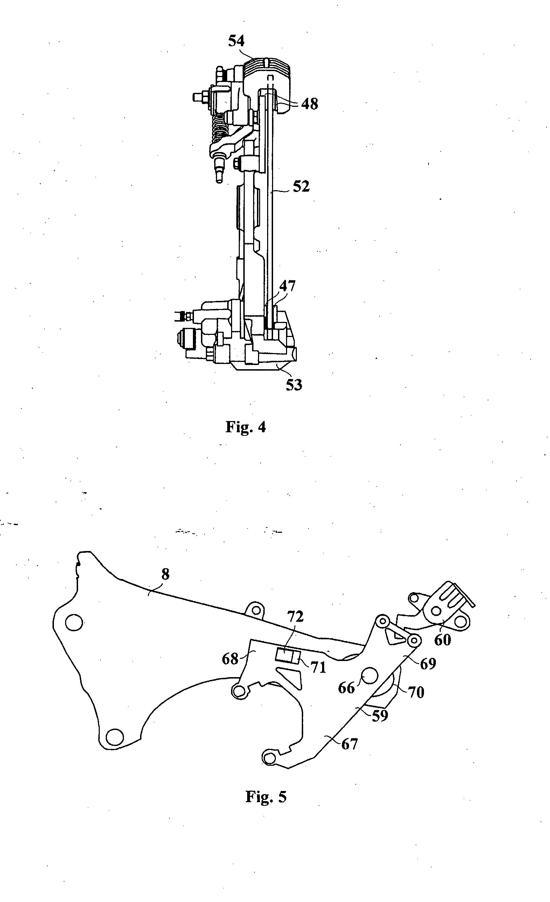

A construction of a rear wheel braking device provided for the two-wheeled motor vehicle 1 will be described with reference to Figs. 3 and 4. Fig. 3 is a schematic view of the rear wheel braking device. Fig. 4 is a view in vertical section of the rear wheel braking device.

A rear wheel braking device 51 includes a service caliper 53 and a mechanical caliper 54 for quiescence for pressing pads against a brake disc 52 fixed to the rear wheel 9. Quiescence as referred to herein may include preventing rotation of the brake disc 52 during a period of inactivity of the two-wheeled motor vehicle 1. This may be particularly beneficial during a period of inactivity, for instance when the two-wheeled motor vehicle 1 is parked, not actuated or when a rider does not want the two-wheeled motor vehicle 1 to move. By using the mechanical caliper 54 for quiescence to inhibit movement of the brake disc 52, rotation of the rear wheel 9 may also be inhibited thereby preventing movement of the two-wheeled motor vehicle 1. Thus, the two-wheeled vehicle 1 remains stationary. The mechanical caliper 54 for quiescence may form part of a "parking brake." Accordingly, the service caliper 53 may be used during times of travel to apply a brake force to the rear wheel 9 and thereby reduce a speed of the two-wheeled motor vehicle 1, while the mechanical caliper 54 for quiescence may be used during times of inactivity to prevent unwanted movement of the two-wheeled motor vehicle 1.

When the rider grasps the rear brake lever 42, a master cylinder 50 will generate hydraulic pressure for a brake fluid in a pipe 49. Pads 47 provided for the service caliper 53 are pressed against the brake disc 52 by this hydraulic pressure to generate a braking force.

The mechanical caliper 54 for quiescence generates a braking force when the rider pulls a lever 55 rearward (toward the rider), which pulls a wire 56 to press pads 48 of the mechanical caliper 54 against the brake disc. The wire 56 extends from the lever 55 through the inside of the body cover 20 along an upper edge of the swing arm 8 to be connected to the mechanical caliper 54 for quiescence. Preferably, the wire 56 is formed of metal, and extends along the upper edge, shaped linear, of the swing arm 8.

A caliper bracket 59 supports the service caliper 53 and the mechanical caliper 54 for quiescence. The service caliper 53 and the mechanical caliper 54 for quiescence are fixed to the brake disc 52 by the caliper bracket 59. The caliper bracket 59 is a y-shaped plate, and has two arms 67 and 68 for supporting the service caliper 53, and one arm 69 extending away from one of the two arms 67 for supporting the mechanical caliper 54 for quiescence. The caliper bracket 59 has a bore 66 formed between the arm 67 and arm 69 extending in opposite directions, and a rear wheel axle 57 penetrates this bore 66. Since the caliper bracket 59 supports the service caliper 53 with the two arms 67 and 68, vibration of the service caliper 53 can be reduced when braking the brake disc 52 in rotation. Since the mechanical caliper 54 for quiescence pinches the brake disc 52 at rest, there is a low possibility of vibration of the mechanical caliper 54 for quiescence, and thus the mechanical caliper 54 for quiescence can be supported with one arm 69. Since the arm 69 supporting the mechanical caliper 54 for quiescence extends in the opposite direction to one arm 67 of the two arms supporting the service caliper 53, the service caliper 53 and the mechanical caliper 54 for quiescence can be arranged opposite each other, thereby to be able to secure an exposed area of the brake disc 52.

The service caliper 53 is fixed between the arm 67 and arm 68 of the caliper bracket 59, using bolts 60 and 61, in the state of its pads having the brake disc 52 in between. As opposed to the fixed service caliper 53, the mechanical caliper 54 for quiescence is fixed to the arm 69 of the caliper bracket 59, using bolts 62 and 63, in the state of its pads having the brake disc 52 in between. The mechanical caliper 54 for quiescence is further fixed to a support member 60 connected to the arm 69 of the caliper bracket 59, using bolts 64 and 65.

Next, a coupling structure between the mechanical caliper for quiescence and the swing arm will be described with reference to Fig. 5.

The swing arm 8 has bores 70 formed therein which have an elliptical or rectangular shape elongated longitudinally of the swing arm 8 for receiving the rear wheel axle 57. With the coupling position between the rear wheel axle 57 and the swing arm 8 being movable longitudinally of the swing arm 8 as above, when a chain or belt of a drive mechanism becomes extended, the coupling position can be moved rearward of the swing arm 8. The caliper bracket 59 is fixed with the rear wheel axle 57 passed through the bore 66 and a projection 72 of the swing arm 8 inserted in a rectangular bore 71. With the bore 71 formed in this caliper bracket 59 also having the rectangular shape or elliptical shape elongated longitudinally of the swing arm 8, when the chain or belt of the drive mechanism is extended, the insert position can be moved rearward of the swing arm 8.

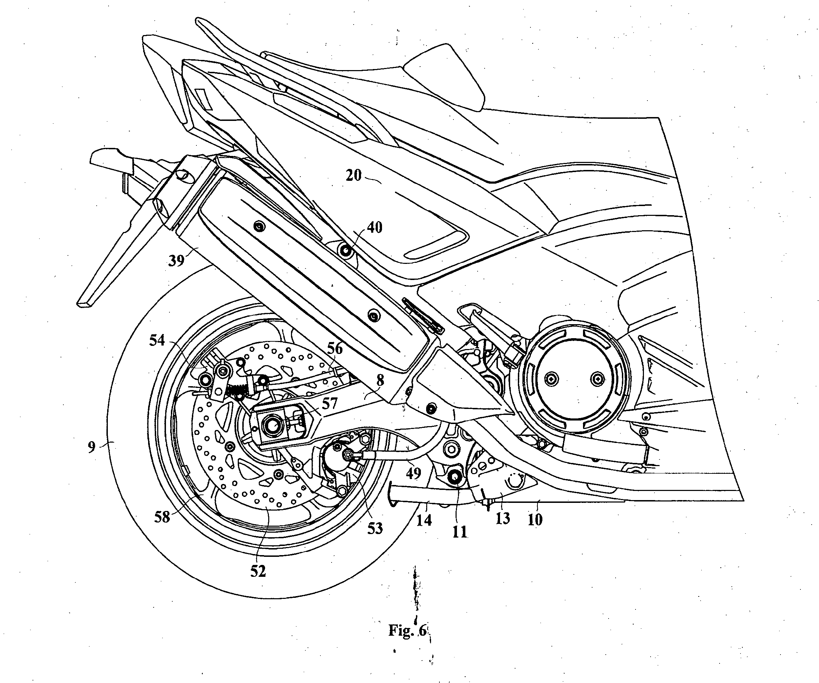

Next, the constructions of the calipers provided for the rear wheel will be described with reference to Fig. 6. Fig. 6 is an enlarged view of the rear wheel and adjacent components of the two-wheeled motor vehicle.

The rear wheel 9 is rotatably supported by the rear wheel axle 57. The rear wheel axle 57 is fixed at both ends thereof to the swing arm 8. The brake disc 52 is fixed to the right side of a wheel 58 of the rear wheel 9. The service caliper 53 and the mechanical caliper 54 for quiescence are attached to the swing arm 8 through the caliper bracket 59.

The service caliper 53 is disposed forward of and below the rear wheel axle 57, in other words, forward of the rear wheel axle 57 and below the swing arm 8. The mechanical caliper 54 for quiescence is disposed rearward of and above the rear wheel axle 57, in other words, rearward of the rear wheel axle 57 and above the swing arm 8. Thus, the service caliper 53 and the mechanical caliper 54 for quiescence are arranged opposite each other, above and below the rear wheel axle 57 and swing arm 8. And the service caliper 53 and the mechanical caliper 54 for quiescence are spaced from each other. This arrangement secures an exposed surface of the brake disc 52 to be capable of efficiently cooling the brake disc 52 heated by friction with the pads 47 of the service caliper 53 at the time of braking of the brake disc 52.

By disposing the service caliper 53 below the swing arm 8 where strong air flows occur at the time of traveling, heat generated in the service caliper 53 at the time of braking can be removed efficiently. By disposing the mechanical caliper 54 for quiescence above the swing arm 8, the wire 56 can be extended along the upper edge of the swing arm 8. Since the wire 56 is formed of metal, which is difficult to bend to small curvature, the wire 56 can be arranged easily by extending it along the linear upper edge of the swing arm 8.

In the enlarged view of the rear wheel and adjacent components of the two-wheeled motor vehicle shown in Fig. 6, the rear suspension 10 is in a state of neither elongation nor contraction. When the rear suspension 10 is not elongated, the exhaust muffler 39 does not overlap the brake disc 52 in side view, but is located obliquely upward of the brake disc 52. Since the one rear suspension 10 is disposed forward of the rear wheel 9, the rear suspension 10, mechanical caliper 54 for quiescence, and service caliper 53 do not overlap one another in side view of the vehicle, thereby realizing a reduced size in the width direction of the two-wheeled motor vehicle 1.

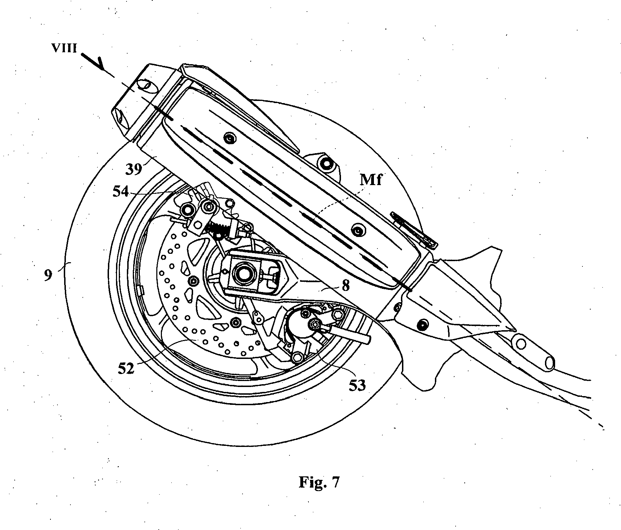

Fig. 7 shows a schematic view of the rear wheel and adjacent components at a time of the rear suspension 10 being under maximum load. For example, when the rear wheel 9 is swung up by irregular conditions of a traveling surface, both the service caliper 53 and the mechanical caliper 54 for quiescence are swung up. In this case, a force acts to elongate the rear suspension 10 to absorb the swing of the rear wheel 9. A state of the rear suspension 10 being under maximum load is a state of the rear wheel 9 being swung to a maximum.

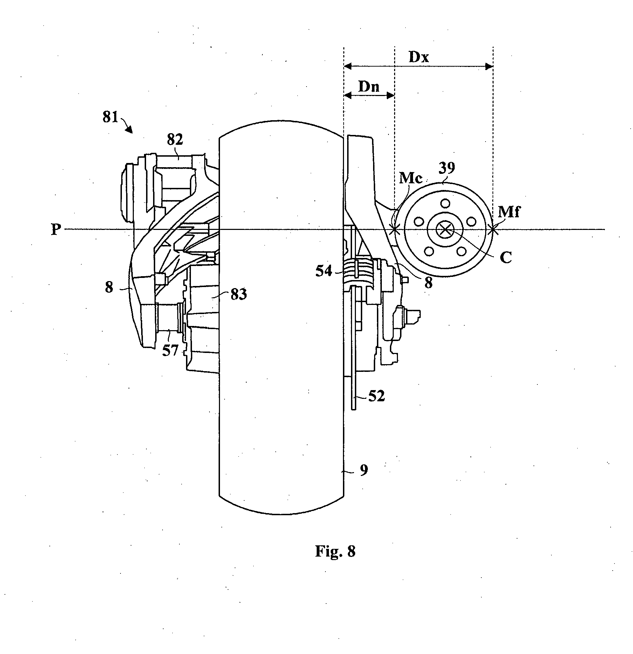

In this state of maximum load, the mechanical caliper 54 for quiescence and the service caliper 53 are located below a plane passing through a straight line closest to the rear wheel 9 and a straight line farthest from the rear wheel 9, which straight lines are on outer surfaces of the exhaust muffler 39. In other words, the mechanical caliper 54 for quiescence and the service caliper 53 are located below a locus of sites, closest to the rear wheel 9, in respective cross sections taken in different positions axially of the exhaust muffler 39. This feature will be described further with reference to Fig. 8 also. Fig. 8 is a view of the rear wheel 9 seen from direction VIII in Fig. 7.

Fig. 8 shows a plane P lying perpendicular to the plane of the figure. The plane P passes through a straight line Mc on the outer surface of the exhaust muffler 39 which is at the shortest distance Dn from the rear wheel 9 and a straight line Mf on the outer surface of the exhaust muffler 39 which is at the longest distance Dx from the rear wheel 9. The straight line Mc is a locus of sites, closest to the rear wheel 9, in respective cross sections taken in different positions along an axis C of the exhaust muffler 39. Since the exhaust muffler 39 is shaped cylindrical in this embodiment, the axis C of the exhaust muffler 39 is included in the plane P. The mechanical caliper 54 for quiescence and the service caliper 53, in an entire area through which the rear wheel 9 is swingable, are located below the plane P passing through the straight line Mc on the outer surface of the exhaust muffler 39 closest to the rear wheel 9 and the straight line Mf on the outer surface of the exhaust muffler 39 farthest from the rear wheel 9. Therefore, the calipers 53 and 54 do not overlap the widest part of the exhaust muffler 39 transversely of the vehicle body. In other words, in the entire area through which the rear wheel 9 is swingable, the mechanical caliper 54 for quiescence and the service caliper 53 are located, in side view, below the locus of the sites closest to the rear wheel 9 in the respective cross sections taken in different positions axially of the exhaust muffler 39. Therefore, the calipers 53 and 54 do not overlap the portion, closest to the rear wheel 9, of each cross section of the exhaust muffler 39 transversely of the vehicle body. Consequently, the exhaust muffler 39 can be disposed close to the rear wheel 9, thereby realizing a reduced size in the width direction of the two-wheeled motor vehicle 1.

In the state of the rear suspension 10 under maximum load, the mechanical caliper 54 for quiescence overlaps the exhaust muffler 39 in side view of the vehicle. Since the mechanical caliper 54 for quiescence and the widest portion of the exhaust muffler 39 do not overlap each other in this state, the size in the width direction of the two-wheeled motor vehicle 1 can be reduced. Further, since, in the state of the rear suspension 10 under maximum load, the mechanical caliper 54 for quiescence overlaps the exhaust muffler 39 in side view of the vehicle, an overlap area of the mechanical caliper 54 for quiescence and the exhaust muffler 39 will decrease as the load weakens from the maximum load state of the rear suspension 10. Consequently, the mechanical caliper 54 for quiescence, service caliper 53, and brake disc 52 can be exposed, and can be cooled appropriately. This is the case also where the service caliper 53 and mechanical caliper 54 for quiescence are arranged in a reverse relationship. Even if both of the service caliper 53 and mechanical caliper 54 for quiescence overlapped the exhaust muffler 39 in side view of the vehicle, the service caliper 53 and mechanical caliper 54 for quiescence would not overlap the widest portion of the exhaust muffler 39.

A drive mechanism 81 includes a first pulley 82 fixed to the left of an output shaft of the engine unit 7, and a second pulley 83 fixed to the left of the wheel 58 of the rear wheel 9, with a toothed belt wound around the first pulley 82 and the second pulley 83. That is, the drive mechanism 81 is disposed at one side of the rear wheel 9, while the exhaust muffler 39, brake disc 52, mechanical caliper 54 for quiescence, and service caliper 53 are arranged at the other side of the rear wheel 9. This arrangement can reduce a bias in the right and left vehicle width around the rear wheel 9, and reduce a difference in weight between right and left sides, to maintain an excellent right and left weight balance of the rear wheel 9.

According to the two-wheeled motor vehicle 1 in this embodiment, the exhaust muffler 39 is attached to a side of the body frame 2, and the brake disc 52, service caliper 53 and mechanical caliper 54 for quiescence are attached to the same side as the exhaust muffler 39. By attaching the service caliper 53 and mechanical caliper 54 for quiescence as separate elements to the brake disc 52, the structure of each is simplified and maintenance and change of the parts are made easy.

With the service caliper 53 disposed forward of and below the rear wheel axle 57 and the mechanical caliper 54 for quiescence disposed rearward of and above the rear wheel axle 57, the mechanical caliper 54 for quiescence and the service caliper 53 are opposed to each other across the rear wheel axle 57. The mechanical caliper 54 for quiescence and the service caliper 53 may be in a reverse arrangement. Since the mechanical caliper 54 for quiescence and the service caliper 53 are spaced from each other, an exposed surface of the brake disc 52 is formed rearward of and below the rear wheel axle 57, whereby the brake disc 52 can be cooled efficiently.

With the service caliper 53 disposed forward of the rear wheel axle 57 and below the swing arm 8, and the mechanical caliper 54 for quiescence disposed rearward of the rear wheel axle 57 and above the swing arm 8, the mechanical caliper 54 for quiescence and the service caliper 53 are opposed to each other across the rear wheel axle 57. The mechanical caliper 54 for quiescence and the service caliper 53 may be in a reverse arrangement. Since the mechanical caliper 54 for quiescence and the service caliper 53 are spaced from each other, an exposed surface of the brake disc 52 is formed rearward of and below the rear wheel axle 57, whereby the brake disc 52 can be cooled efficiently. Since the mechanical caliper 54 for quiescence and the service caliper 53 are arranged above or below the swing arm 8, the mechanical caliper 54 for quiescence and the service caliper 53 do not overlap the swing arm 8 in side view of the vehicle, which realizes a reduced size in the width direction of the two-wheeled motor vehicle 1.

The service caliper 53 heavier than the mechanical caliper 54 for quiescence is disposed forward of and below the mechanical caliper 54 for quiescence, thereby to attain a low center of gravity. Improved maintainability is assured by disposing the mechanical caliper 54 for quiescence, which has a high frequency of maintenance, rearward of and above the service caliper 53.

The exhaust muffler 39 attached to the body frame 2 to extend rearward and upward can reduce the area where the exhaust muffler 39 and the brake disc 52 overlap each other in side view of the vehicle, and increase the extents of exposure of the mechanical caliper 54 for quiescence and the service caliper 53. Since the exhaust muffler 39 can be spaced from the mechanical caliper 54 for quiescence and service caliper 53, heat conduction of the exhaust muffler 39 is reduced, thereby to improve the cooling effect of each caliper.

The present invention is not limited to the foregoing embodiment, but may be modified as follows:
(1) The exhaust muffler 39 is shaped cylindrical in the foregoing embodiment, but may have a shape of triangular prism or elliptical tube, instead.
(2) The two-wheeled motor vehicle 1 is a scooter type vehicle in the foregoing embodiment, but may be a super-sport type, cruiser type, naked type, tourer type, or off-road type vehicle.

The present invention may be embodied in other specific forms without departing from essential attributes thereof and, accordingly, reference should be made to the appended claims, rather than to the foregoing specification, as indicating the scope of the invention.

## Claims

1. A two-wheeled motor vehicle (1) comprising:
a body frame (2);
a rear wheel (9) swingable through an area relative to the body frame (2);
an exhaust muffler (39) disposed at a side of the rear wheel (9);
a brake disc (52) attached to the rear wheel (9) at the side;
a service caliper (53) disposed on the brake disc (52) for producing a braking force while the two-wheeled motor vehicle (1) is traveling; and
a mechanical caliper (54) for quiescence that prevents rotation of the brake disc (52), the mechanical caliper (54) being disposed on the brake disc (52) separately from the service caliper (53);
**characterized in that**, in a side view and in every position within the entire area through which the rear wheel (9) is swingable, the mechanical caliper (54) and the service caliper (53) are located below a locus of the sites of the exhaust muffler (39) that are each closest to the rear wheel (9) than any other site of the exhaust muffler (39) in respective cross sections taken in different axial positions of the exhaust muffler (39) along an axis (C) of the exhaust muffler (39).

2. The two-wheeled motor vehicle (1) according to claim 1, further comprising:
a rear wheel axle (57) for rotatably supporting the rear wheel (9),
wherein one of the mechanical caliper (54) and the service caliper (53) is disposed forward of and below the rear wheel axle (57), and the other of the mechanical caliper (54) and the service caliper (53) is disposed rearward of and above the rear wheel axle (57).

3. The two-wheeled motor vehicle (1) according to claim 1, further comprising:
a swing arm (8) swingably supported relative to the body frame (2); and
a rear wheel axle (57) connected to the swing arm (8) for rotatably supporting the rear wheel (9),
wherein one of the mechanical caliper (54) and the service caliper (53) is disposed forward of the rear wheel axle (57) and below the swing arm (8), and the other of the mechanical caliper (54) and the service caliper (53) is disposed rearward of the rear wheel axle (57) and above the swing arm (8).

4. The two-wheeled motor vehicle (1) according to claim 2, wherein the service caliper (53) is disposed below the mechanical caliper (54).

5. The two-wheeled motor vehicle (1) according to claim 3, wherein the service caliper (53) is disposed below the mechanical caliper (54).

6. The two-wheeled motor vehicle (1) according to any one of claims 1 to 5, wherein the exhaust muffler (39) is attached to the body frame (2) to extend rearward and upward from the body frame (2).

7. The two-wheeled motor vehicle (1) according to any one of claims 1 to 6, further comprising a rear wheel drive mechanism (81) disposed at an opposite side of the mechanical caliper (54) and the service caliper (53) relative to the rear wheel (9).

8. The two-wheeled motor vehicle (1) according to any one of claims 1 to 7, further comprising:
a rear wheel suspension (10) for absorbing swings of the rear wheel (9),
wherein in a state of maximum load on the rear wheel suspension (10), at least one of the mechanical caliper (54) and the service caliper (53) overlaps the exhaust muffler (39) in the side view.

9. The two-wheeled motor vehicle (1) according to claim 8, wherein the rear wheel suspension (10) is disposed forward of the rear wheel (9).

10. The two-wheeled motor vehicle (1) according to any one of claims 1 to 9, further comprising:
a caliper bracket (59) for supporting the service caliper (53) and the mechanical caliper (54),
the caliper bracket (59) including two arms (67, 68) for supporting the service caliper (53), and one arm (69) extending in an opposite direction to one of the two arms (67, 68) for supporting the mechanical caliper (54).

11. The two-wheeled motor vehicle (1) according to any one of claims 1 to 10, wherein in each of said cross sections, the exhaust muffler (39) includes a further site that is further away from the rear wheel (9) than any other portion of exhaust muffler (39) in the cross section, and
wherein in a state of maximum load of the rear wheel suspension (10) and in a rear view perpendicular to an axial direction of the exhaust muffler (39), the service caliper (53) and the mechanical caliper (54) are disposed beneath a plane formed between the sites of the exhaust muffler (39) that are closest to the rear wheel (9) and the further sites.

12. The two-wheeled motor vehicle (1) according to any one of claims 1 to 10, wherein, in the side view and in every position within the entire area through which the rear wheel (9) is swingable, neither of the mechanical caliper (54) and the service caliper (53) overlap any of said locus of the sites of the exhaust muffler (39) that are each closest to the rear wheel (9).

## Patentansprüche

1. Ein zweirädriges Kraftfahrzeug (1), das folgende Merkmale aufweist:
einen Karosserierahmen (2);
ein Hinterrad (9), das durch einen Bereich relativ zum Karosserierahmen (2) schwenkbar ist;
einen Abgasschalldämpfer (39), der auf einer Seite des Hinterrads (9) angeordnet ist;
eine Bremsscheibe (52), die an dem Hinterrad (9) seitlich befestigt ist;
einen Betriebsbremssattel (53), der auf der Bremsscheibe (52) angeordnet ist, um eine Bremskraft zu erzeugen, während sich das zweirädrige Kraftfahrzeug (1) fortbewegt; und
einen mechanischen Bremssattel (54) für einen Ruhezustand, der die Drehbewegung der Bremsscheibe (52) verhindert, wobei der mechanische Bremssattel (54) separat von dem Betriebsbremssattel (53) auf der Bremsscheibe (52) angeordnet ist;
**dadurch gekennzeichnet, dass** in einer Seitenansicht und in jeder Position innerhalb des gesamten Bereichs, durch den das Hinterrad (9) schwenkbar ist, der mechanische Bremssattel (54) und der Betriebsbremssattel (53) sich unterhalb eines Orts der Stellen des Abgasschalldämpfers (39) befinden, die jeweils am nächsten zu dem Hinterrad (9) liegen als jede andere Stelle des Abgasschalldämpfers (39) in jeweiligen Querschnitten, die in verschiedenen axialen Positionen des Abgasschalldämpfers (39) entlang einer Achse (C) des Abgasschalldämpfers (39) erstellt wurden.

2. Das zweirädrige Kraftfahrzeug (1) gemäß Anspruch 1, das ferner folgendes Merkmal aufweist:
eine Hinterradachse (57) zum drehbaren Tragen des Hinterrads (9),
wobei einer des mechanischen Bremssattels (54) und des Betriebsbremssattels (53) vor und unterhalb der Hinterradachse (57) angeordnet ist, und der andere des mechanischen Bremssattels (54) und des Betriebsbremssattels (53) hinter und oberhalb der Hinterradachse (57) angeordnet ist.

3. Das zweirädrige Kraftfahrzeug (1) gemäß Anspruch 1, das ferner folgende Merkmale aufweist:
einen Schwenkarm (8), der relativ zu dem Karosserierahmen (2) schwenkbar getragen wird; und
eine mit dem Schwenkarm (8) verbundene Hinterradachse (57) zum drehbaren Tragen des Hinterrads (9,
wobei einer des mechanischen Bremssattels (54) und des Betriebsbremssattels (53) vor der Hinterradachse (57) und unterhalb des Schwenkarms (8) angeordnet ist und der andere des mechanischen Bremssattels (54) und des Betriebsbremssattels (53) hinter der Hinterradachse (57) und oberhalb des Schwenkarms (8) angeordnet ist.

4. Das zweirädrige Kraftfahrzeug (1) gemäß Anspruch 2, bei dem der Betriebsbremssattel (53) unterhalb des mechanischen Bremssattels (54) angeordnet ist.

5. Das zweirädrige Kraftfahrzeug (1) gemäß Anspruch 3, bei dem der Betriebsbremssattel (53) unterhalb des mechanischen Bremssattels (54) angeordnet ist.

6. Das zweirädrige Kraftfahrzeug (1) gemäß einem der Ansprüche 1 bis 5, bei dem der Abgasschalldämpfer (39) an dem Karosserierahmen (2) befestigt ist, um sich von dem Karosserierahmen (2) aus nach hinten und nach oben zu erstrecken.

7. Das zweirädrige Kraftfahrzeug (1) gemäß einem der Ansprüche 1 bis 6, das ferner einen Hinterradantriebsmechanismus (81) aufweist, der auf einer gegenüberliegenden Seite des mechanischen Bremssattels (54) und des Betriebsbremssattels (53) relativ zu dem Hinterrad (9) angeordnet ist.

8. Das zweirädrige Kraftfahrzeug (1) gemäß einem der Ansprüche 1 bis 7, das ferner folgendes Merkmal aufweist:
eine Hinterradaufhängung (10) zum Absorbieren von Schwankungen des Hinterrads (9),
wobei in einem Zustand einer Höchstbelastung der Hinterradaufhängung (10) zumindest entweder der mechanische Bremssattel (54) und/oder der Betriebsbremssattel (53) den Abgasschalldämpfer (39) in der Seitenansicht überdeckt.

9. Das zweirädrige Kraftfahrzeug (1) gemäß Anspruch 8, bei dem die Hinterradaufhängung (10) vor dem Hinterrad (9) angeordnet ist.

10. Das zweirädrige Kraftfahrzeug (1) gemäß einem der Ansprüche 1 bis 9, das ferner folgendes Merkmal aufweist:
eine Bremssattelklammer (59) zum Tragen des Betriebsbremssattels (53) und des mechanischen Bremssattels (54),
wobei die Bremssattelhalterung (59) zwei Arme (67, 68) zum Tragen des Betriebsbremssattels (53) und einen Arm (69), der sich in einer zu einem der zwei Arme entgegengesetzten Richtung erstreckt, zum Tragen des mechanischen Bremssattels (54) umfasst.

11. Das zweirädrige Kraftfahrzeug (1) gemäß einem der Ansprüche 1 bis 10, bei dem in jedem der Querschnitte der Abgasschalldämpfer (39) eine weitere Stelle umfasst, die sich weiter entfernt von dem Hinterrad (9) befindet als jeder andere Abschnitt des Abgasschalldämpfers (39) im Querschnitt, und
bei dem in einem Zustand einer Höchstbelastung der Hinterradaufhängung (10) und in einer Rückansicht, die senkrecht zu einer axialen Richtung des Abgasschalldämpfers (39) ist, der Betriebsbremssattel (53) und der mechanische Bremssattel (54) unterhalb einer Ebene angeordnet sind, die zwischen den Stellen des Abgasschalldämpfers (39) gebildet ist, die am nächsten zu dem Hinterrad (9) und den weiteren Stellen liegt.

12. Das zweirädrige Kraftfahrzeug (1) gemäß einem der Ansprüche 1 bis 10, bei dem in der Seitenansicht und in jeder Position innerhalb des gesamten Bereichs, durch den das Hinterrad (9) schwenkbar ist, weder der mechanische Bremssattel (54) noch der Betriebsbremssattel (53) einen der Orte der Stellen des Abgasschalldämpfers (39), die jeweils am nächsten zu dem Hinterrad (9) liegen, überdeckt.

## Revendications

1. Véhicule motorisé à deux roues (1) comprenant:
un châssis de carrosserie (2);
une roue arrière (9) pouvant pivoter à travers une zone par rapport au châssis de carrosserie (2);
un silencieux d'échappement (39) disposé d'un côté de la roue arrière (9);
un disque de frein (52) fixé à la roue arrière (9) sur le côté;
un étrier de service (53) disposé sur le disque de frein (52), destiné à produire une force de freinage lorsque le véhicule motorisé à deux roues (1) se déplace; et
un étrier mécanique (54) pour la quiescence qui empêche la rotation du disque de frein (52), l'étrier mécanique (54) étant disposé sur le disque de frein (52) de manière séparée de l'étrier de service (53);
**caractérisé par le fait que**, en vue latérale et dans toute position dans toute la zone à travers laquelle la roue arrière (9) peut pivoter, l'étrier mécanique (54) et l'étrier de service (53) sont situés au-dessous d'un lieu des sites du silencieux d'échappement (39) qui sont, chacun, plus proches de la roue arrière (9) que tout autre site du silencieux d'échappement (39) dans des sections respectives prises dans différentes positions axiales du silencieux d'échappement (39) le long d'un axe (C) du silencieux d'échappement (39).

2. Véhicule motorisé à deux roues (1) selon la revendication 1, comprenant par ailleurs:
un essieu de roue arrière (57) destiné à supporter en rotation la roue arrière (9),
dans lequel l'un parmi l'étrier mécanique (54) et l'étrier de service (53) est disposé à l'avant et au-dessous de l'essieu de roue arrière (57), et l'autre parmi l'étrier mécanique (54) et l'étrier de service (53) est disposé à l'arrière et au-dessus de l'essieu de roue arrière (57).

3. Véhicule motorisé à deux roues (1) selon la revendication 1, comprenant par ailleurs:
un bras oscillant (8) supporté de manière oscillante par rapport au châssis de carrosserie (2); et
un essieu de roue arrière (57) connecté au bras oscillant (8) pour supporter en rotation la roue arrière (9),
dans lequel l'un parmi l'étrier mécanique (54) et l'étrier de service (53) est disposé à l'avant de l'essieu de roue arrière (57) et au-dessous du bras oscillant (8), et l'autre parmi l'étrier mécanique (54) et l'étrier de service (53) est disposé à l'arrière de l'essieu de roue arrière (57) et au-dessus du bras oscillant (8).

4. Véhicule motorisé à deux roues (1) selon la revendication 2, dans lequel l'étrier de service (53) est disposé au-dessous de l'étrier mécanique (54).

5. Véhicule motorisé à deux roues (1) selon la revendication 3, dans lequel l'étrier de service (53) est disposé au-dessous de l'étrier mécanique (54).

6. Véhicule motorisé à deux roues (1) selon l'une quelconque des revendications 1 à 5, dans lequel le silencieux d'échappement (39) est fixé au châssis de carrosserie (2) de manière à s'étendre vers l'arrière et vers le haut à partir du châssis de carrosserie (2).

7. Véhicule motorisé à deux roues (1) selon l'une quelconque des revendications 1 à 6, comprenant par ailleurs un mécanisme d'entraînement de roue arrière (81) disposé d'un côté opposé à l'étrier mécanique (54) et à l'étrier de service (53) par rapport à la roue arrière (9).

8. Véhicule motorisé à deux roues (1) selon l'une quelconque des revendications 1 à 7, comprenant par ailleurs:
une suspension de roue arrière (10) destinée à absorber les oscillations de la roue arrière (9),
dans lequel, dans un état de charge maximale sur la suspension de roue arrière (10), au moins l'un parmi l'étrier mécanique (54) et l'étrier de service (53) vient en recouvrement avec le silencieux d'échappement (39), en vue latérale.

9. Véhicule motorisé à deux roues (1) selon la revendication 8, dans lequel la suspension de roue arrière (10) est disposée à l'avant de la roue arrière (9).

10. Véhicule motorisé à deux roues (1) selon l'une quelconque des revendications 1 à 9, comprenant par ailleurs:
un support d'étrier (59) destiné à supporter l'étrier de service (53) et l'étrier mécanique (54),
le support d'étrier (59) comprenant deux bras (67, 68) destinés à supporter l'étrier de service (53), et un bras (69) s'étendant dans une direction opposée à l'un des deux bras (67, 68) pour supporter l'étrier mécanique (54).

11. Véhicule motorisé à deux roues (1) selon l'une quelconque des revendications 1 à 10, dans lequel, dans chacune desdites sections, le silencieux d'échappement (39) comporte un autre site qui est plus éloigné de la roue arrière (9) que toute autre partie du silencieux d'échappement (39) dans la section, et
dans lequel, dans un état de charge maximale de la suspension de roue arrière (10) et en vue arrière perpendiculaire à une direction axiale du silencieux d'échappement (39), l'étrier de service (53) et l'étrier mécanique (54) sont disposés sous un plan formé entre les sites du silencieux d'échappement (39) qui sont les plus proches de la roue arrière (9) et les autres sites.

12. Véhicule motorisé à deux roues (1) selon l'une quelconque des revendications 1 à 10, dans lequel, en vue latérale et dans toute position dans toute la zone à travers laquelle la roue arrière (9) peut pivoter, aucun parmi l'étrier mécanique (54) et l'étrier de service (53) ne vient en recouvrement avec l'un quelconque desdits lieux des sites du silencieux d'échappement (39) qui sont, chacun, plus proches de la roue arrière (9).
